# EUROPEAN PATENT SPECIFICATION

(11) **EP 4 513 426 B1**
(45) Date of publication and mention of the grant of the patent: **08.07.2026**
(21) Application number: 23790870.2
(22) Date of filing: 21.02.2023
(51) Int. Cl.: G06T 7/00

(54) **METHOD, DEVICE AND SYSTEM FOR DETECTING DEFECTS OF SEPARATOR FOR COMPOSITE MATERIAL STRIP**
VERFAHREN, VORRICHTUNG UND SYSTEM ZUR ERKENNUNG VON DEFEKTEN EINES SEPARATORS FÜR EINEN VERBUNDSTOFFSTREIFEN
PROCÉDÉ, DISPOSITIF ET SYSTÈME DE DÉTECTION DE DÉFAUTS DE SÉPARATEUR POUR BANDE DE MATÉRIAU COMPOSITE

(30) Priority: 18.04.2022 CN 202210405574
(43) Date of publication of application: 26.02.2025
(73) Proprietor: Contemporary Amperex Technology Co., Limited, Ningde, Fujian 352100 (CN)
(72) Inventor: ZHAO, Baiquan, Ningde, Fujian 352100 (CN); HU, Jun, Ningde, Fujian 352100 (CN); LI, Hongyuan, Ningde, Fujian 352100 (CN); XIE, Xianfeng, Ningde, Fujian 352100 (CN); LEI, Yang, Ningde, Fujian 352100 (CN)
(74) Representative: Ran, Handong
(86) International application number: PCT/CN2023/077453
(87) International publication number: WO 2023/202207

(56) References cited:
- CN-A- 109 360 186
- CN-A- 109 360 186
- CN-A- 112 950 547
- CN-A- 113 030 093
- CN-A- 113 758 932
- CN-A- 114 170 140
- CN-A- 115 641 329
- CN-U- 208 420 734
- CN-U- 213 779 894
- CN-U- 213 779 894
- JP-A- 2019 023 589
- US-A1- 2007 055 951
- JIA-HE ZHOU, GONG LIN-FAN, WANG SHENG-YAO: "Research on Detection of Electrode Fold of Spirally Wound Flattened Lithium Batteries", INSTRUMENT TECHNIQUE AND SENSOR, vol. 5, no. 5, 15 May 2021 (2021-05-15), pages 107 - 111, XP093102310
- HUBER J., TAMMER C., KROTIL S., WAIDMANN S., HAO X., SEIDEL C., REINHART G.: "Method for Classification of Battery Separator Defects Using Optical Inspection", PROCEDIA CIRP, ELSEVIER, NL, vol. 57, 1 January 2016 (2016-01-01), NL , pages 585 - 590, XP093101659, ISSN: 2212-8271, DOI: 10.1016/j.procir.2016.11.101

## Description

### TECHNICAL FIELD

This application relates to the technical field of battery production inspection, and specifically, to a method and system for defect detection of a separator of a composite material strip, an electronic device, a lamination machine, a computer-readable storage medium, and a computer program product.

### BACKGROUND

In the related art, a rechargeable battery (a battery that can be used continuously by activating the active material through charging after the battery is discharged, also known as a secondary battery) includes a battery box and a plurality of battery cells that are combined in series and/or parallel inside the battery box. The battery cell is the smallest unit that provides energy source in the battery. A battery cell assembly is a key component in which electrochemical reactions take place in the battery cell, and its main structure includes an anode electrode plate, a cathode electrode plate, and a separator for separating the anode electrode plate from the cathode electrode plate.

According to the production process, battery cell assemblies can be classified into wound battery cell assemblies and laminated battery cell assemblies. The compounding process of the lamination material strip may cause damage to the battery cell assembly, so how the production yield of laminated battery cell assemblies is improved is a technical issue that needs to be solved urgently by persons skilled in the art.

CN109360186A discloses a method for detecting defects in a lithium battery separator, which comprises: preprocessing an image of the separator, filtering interference signal from the image; binarizing the acquired image to detect a separator region in the image; and extracting a defect region in the separator region using a gray level threshold.

CN213779894U discloses a method and device for detecting defects in a batter separator in real time. An image acquisition unit is used for acquiring an image of the separator, and detecting whether there is a defect in the image. A code printing gun is used for receiving the determining result generated by the image acquisition unit and printing a label on the defect area of the separator.

CN208420734U discloses techniques for detecting defects in a lithium battery separator defect. A vision detection apparatus is arranged above a convey apparatus for conveying the separator, and is used capture images of the separator and identify defects exist in the images.

### SUMMARY

This application is intended to resolve at least one of the technical issues in the prior art. To this end, an objective of this application is to provide a method and system for defect detection of a separator of a composite material strip, an electronic device, a lamination machine, a computer-readable storage medium, and a computer program product. The invention is set out in the appended set of claims.

According to an aspect of this application, a method for defect detection of a separator of a composite material strip is provided, where the method includes: obtaining a continuous image of the composite material strip; intercepting at least one image segment from the continuous image of the composite material strip, where the image segment includes a separator region; and performing detection on the separator region.

According to the solution of this embodiment of this application, detection can be performed for defects existing in a continuous separator of the composite material strip in the lamination process, which helps relevant personnel to adjust a relevant component in the lamination machine in a timely manner, thereby effectively controlling the outflow of battery cell assemblies with defects in the separator, increasing the yield of production, and reducing the waste of production materials.

In some embodiments, the image segment further includes an electrode plate body region surrounded by the separator region, a plurality of tab protruding regions, and a background region adjacent to the separator region, and the method further includes: extracting the separator region from the image segment.

In some embodiments, the extracting the separator region from the image segment includes: removing a background region from the image segment based on a maximum grayscale threshold of the background region to obtain a first intermediate image; extracting, from the first intermediate image, an image of a maximum rectangular region inscribed with edges of the first intermediate image as a second intermediate image; and removing a rectangular electrode plate body region from the second intermediate image based on a maximum grayscale threshold of the electrode plate body region to obtain the separator region. According to the solution of this embodiment, the extraction of the separator region can be realized.

In some embodiments, the performing detection on the separator region includes: determining whether the separator region includes a suspected defect region.

In some embodiments, the determining whether the separator region includes a suspected defect region includes: in response to determining that the separator region includes an abnormal pixel set, obtaining at least one independently connected abnormal pixel subset based on the abnormal pixel set, where a grayscale of each pixel in the abnormal pixel set is less than a minimum grayscale threshold of the separator region; and for each such abnormal pixel subset, in response to determining that an area of the abnormal pixel subset is greater than an area threshold, determining that the separator region includes the suspected defect region. According to the solution of this embodiment, the suspected defect region can be identified.

In some embodiments, the performing detection on the separator region includes: determining a suspected defect type corresponding to the suspected defect region based on geometrical characteristic information of the suspected defect region, where the suspected defect type includes suspected damage or suspected wrinkle. In this embodiment, the suspected defect type of the suspected defect region such as suspected damage or suspected wrinkle can be further determined.

In some embodiments, the performing detection on the separator region includes: determining a confidence coefficient of the suspected defect region based on image information of the suspected defect region and image information of at least one separator defect sample in a separator defect sample library; and in response to determining that the confidence coefficient is greater than a confidence threshold, determining that the suspected defect region is a defect region. According to the solution of this embodiment, whether the suspected defect region is a defect region can be accurately determined.

In some embodiments, the obtaining a continuous image of the composite material strip includes: obtaining a continuous image shot by a line scan camera for each side surface of the composite material strip. In this way, the defect detection can be performed for the separators on both sides of the composite material strip.

In some embodiments, the method further includes: outputting a detection result, where the detection result includes at least one of the following: positioning information of the defect region in the image segment, geometrical characteristic information of the defect region, positioning information of the image segment corresponding to the composite material strip, alarm information indicating that the separator is defective, and a defect type, where the defect type includes damage or wrinkle. The foregoing content of the detection result is helpful for the relevant personnel to know about the specific situation of the defects in the separator, so that the relevant component in the lamination machine can be adjusted in a timely manner.

According to an example, an apparatus for defect detection of a separator of a composite material strip is provided, where the apparatus includes: an obtaining unit, configured to obtain a continuous image of the composite material strip; an extraction unit, configured to intercept at least one image segment from the continuous image of the composite material strip, where the image segment includes a separator region; and a detection unit, configured to perform detection on the separator region. The solution of this embodiment can achieve the same technical effect as the above method.

According to an aspect of this application, an electronic device is provided, where the electronic device includes at least one processor and a memory communicatively connected to the at least one processor, where the memory stores instructions executable by the at least one processor, and when the instructions are executed by the at least one processor, the at least one processor is caused to execute the foregoing method.

According to one an aspect of this application, a system for defect detection of a separator of a composite material strip is provided, including: a first image acquisition unit, configured to acquire a continuous image of one side surface of the composite material strip; a second image acquisition unit, configured to acquire a continuous image of another side surface of the composite material strip; and the electronic device according to the foregoing aspect, connected to the first image acquisition unit and the second image acquisition unit separately. According to the solution of this embodiment, detection is performed for defects existing in a continuous separator of the composite material strip in the lamination process, which helps relevant personnel to adjust a relevant component in the lamination machine in a timely manner, thereby effectively controlling the outflow of defective battery cell assemblies, increasing the yield of production, and reducing the waste of production materials.

In some embodiments, the first image acquisition unit is a first line scan camera and the second image acquisition unit is a second line scan camera; and the system further includes a first line light source for illuminating an acquisition region of the first line scan camera and a second line light source for illuminating an acquisition region of the second line scan camera. The line scan camera is more suitable for situations where there is relative motion between a measured object and the camera and can obtain higher resolution and larger field of view. The line light source is used to provide illumination for the line scan camera.

In some embodiments, the system according to the foregoing aspect further includes a first support roller and a first encoder connected to the first support roller, where the first support roller abuts against one side surface of the composite material strip, and the first encoder is configured to send a pulse signal to the first line scan camera to trigger the first line scan camera to acquire images line by line; and a second support roller and a second encoder connected to the second support roller, where the second support roller abuts against another side surface of the composite material strip, and the second encoder is configured to send a pulse signal to the second line scan camera to trigger the second line scan camera to acquire images line by line. The first support roller and the second support roller can tighten the composite material strip, which is conducive to accurately acquiring images of the composite material strip, thereby improving the accuracy of defect detection.

In some embodiments, the acquisition region of the first line scan camera is arranged at a tangent position of the composite material strip and the first support roller; and the acquisition region of the second line scan camera is arranged at a tangent position of the composite material strip and the second support roller. This solution facilitates the installation and alignment of the line scan camera and the line light source, thereby facilitating the accurate installation of the line scan camera and the line light source, and further helping to improve the accuracy of defect detection.

According to an aspect of this application, a lamination machine is provided, including the system according to the foregoing aspect. In the lamination process of the lamination machine, detection is performed for the defects existing in the separator of the continuous composite material strip, which helps the relevant personnel to adjust the relevant component in the lamination machine in a timely manner, thereby increasing the yield of production.

According to an aspect of this application, a computer-readable storage medium storing computer instructions is provided, where the computer instructions are used to cause a computer to execute the method according to foregoing aspect.

According to an aspect of this application, a computer program product is provided, including a computer program, where when the computer program is executed by a processor, the method according to the foregoing aspect is implemented.

According to the foregoing embodiments of this application, detection can be performed for defects existing in a continuous separator of the composite material strip in the lamination process, which helps relevant personnel to adjust a relevant component in the lamination machine in a timely manner, thereby effectively controlling the outflow of battery cell assemblies with defects in the separator, increasing the yield of production, and reducing the waste of production materials.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, the same reference signs in a plurality of accompanying drawings denote the same or similar components or elements. The accompanying drawings are not necessarily drawn to scale. It should be understood that these accompanying drawings merely describe some embodiments disclosed in this application, and should not be construed as a limitation on the scope of this application. To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a disassembled structure of a laminated battery cell assembly;
FIG. 2 is a structural block diagram of a lamination machine in the related art;
FIG. 3 is a schematic structural diagram of a system for defect detection of a separator of a composite material strip according to some embodiments of this application;
FIG. 4 is a schematic diagram of an image segment according to some embodiments of this application;
FIG. 5 is a schematic flowchart of a method for defect detection of a separator of a composite material strip according to some embodiments of this application;
FIG. 6 is a schematic flowchart of extracting a separator region from an image segment according to some embodiments of this application;
FIG. 7 is a schematic diagram of a suspected defect region in a separator region according to some embodiments of this application;
FIG. 8 is a schematic flowchart of a method for defect detection of a separator of a composite material strip according to some embodiments of this application;
FIG. 9 is a structural block diagram of an apparatus for defect detection of a separator of a composite material strip; and
FIG. 10 is a structural block diagram of a lamination machine according to some embodiments of this application.

### Description of reference signs:

100: laminated battery cell assembly; 110: anode electrode plate; 111: anode electrode plate body; 112: anode electrode tab;
120: cathode electrode plate; 121: cathode electrode plate body; 122: cathode electrode tab; 130: separator; 200: lamination machine;
210: first cutting mechanism; 220: first compounding mechanism; 230: second cutting mechanism; 240: second compounding mechanism;
250: lamination mechanism; 400: system; 410: first image acquisition unit; 420: second image acquisition unit;
430: first line light source; 440: second line light source; 450: first support roller; 460: second support roller;
470: first encoder; 480: second encoder; 490: electronic device; 550: continuous image; 500: image segment;
510: separator region; 511: defect region; 511a: damaged region; 511b: wrinkled region; 520: electrode plate body region;
530: tab protruding region; 540: background region; 5100: tab-separator overlapping region; 710: first intermediate image;
720: second intermediate image; 512: abnormal pixel subset; 513: suspected defect region; 1001: obtaining unit;
1002: extraction unit; 1003: detection unit; 1100: lamination machine; 1110: first cutting mechanism; 300: composite material strip;
1120: first compounding mechanism; 1130: second cutting mechanism; 1140: second compounding mechanism; and 1150: lamination mechanism.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the technical terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the technical terms "mounting", "connection", "joining", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

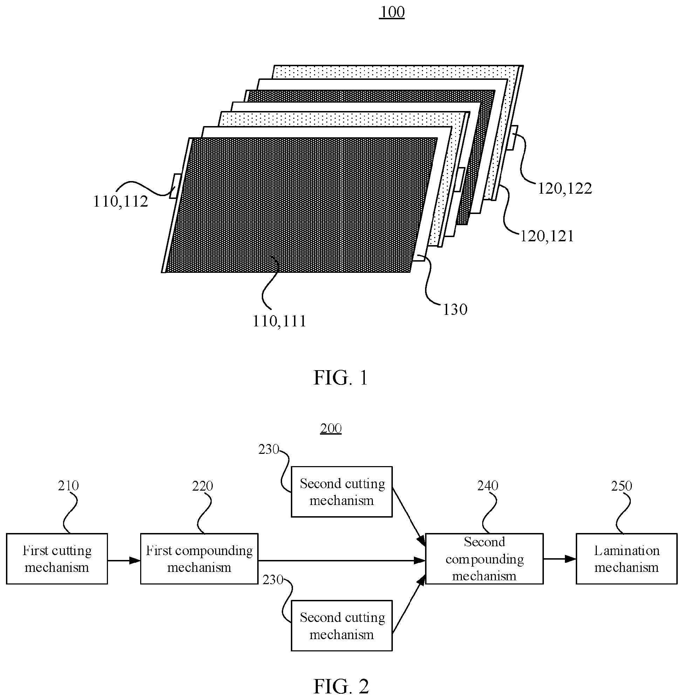

As shown in FIG. 1, the laminated battery cell assembly 100 includes a plurality of anode electrode plates 110 and a plurality of cathode electrode plates 120 alternately arranged, and a separator 130 arranged between any adjacent anode electrode plate 110 and cathode electrode plate 120. The anode electrode plate 110 includes an anode electrode plate body 111 provided with an active material and an anode electrode tab 112 without an active material layer, and the cathode electrode plate 120 includes a cathode electrode plate body 121 provided with an active material and a cathode electrode tab 122 without an active material layer. Inside a lithium-ion battery cell (hereinafter referred to as a battery cell), the laminated battery cell assembly 100 is soaked in an electrolyte, and lithium ions move between the anode and cathode of the battery cell using the electrolyte as the medium, which enables the battery cell to be charged and discharged. The function of the separator 130 is to allow lithium ions to pass through freely, while preventing electrons from passing through, thereby preventing a short circuit between the anode and cathode of the battery cell caused by the electrolyte.

The lamination process of laminated battery cell assemblies is mainly carried out in a lamination machine. As shown in FIG. 2, in the related art, the lamination machine 200 includes a first cutting mechanism 210, a first compounding mechanism 220, two second cutting mechanisms 230, a second compounding mechanism 240, and a lamination mechanism 250 arranged in sequence. The first cutting mechanism 210 is configured to cut a first electrode plate material segment from a first electrode plate material strip. The first compounding mechanism 220 is configured to compound a first separator material strip and a second separator material strip with two side surfaces of the first electrode plate material segment to form a primary composite material strip. The two second cutting mechanisms 230 are configured to cut a second electrode plate and a third electrode plate respectively from a second electrode plate material strip and a third electrode plate material strip in a one-to-one correspondence, where the second electrode plate material strip has the same polarity as the third electrode plate material strip (they can use the same material and structure) and opposite polarity as the first electrode plate material strip. The second compounding mechanism 240 is configured to alternately compound the second electrode plate and the third electrode plate with two side surfaces of the primary composite material strip to form a secondary composite material strip (hereinafter referred to as composite material strip for short). The lamination mechanism 250 is configured to laminate and cut the composite material strip to form a laminated assembly.

The lamination mechanism 250 of the lamination machine 200 folds the composite material strip in a zigzag manner and cuts it, so as to obtain a laminated assembly. Subsequently, the subsequent production processes of battery cell assemblies, such as hot pressing and tab welding, can be carried out.

In the related art, the quality inspection of the laminated battery cell assembly is arranged after the lamination process. Generally, an X-ray imager is used to scan around the laminated battery cell assembly, and based on a scan image, whether the electrode plates of the laminated battery cell assembly are damaged, wrinkled, or deformed is determined. The working principle of the X-ray imager is as follows: When X-rays irradiate a sample, their transmission intensity is not only related to the energy of the X-rays, but also related to the material density and thickness of the sample material. A smaller material density and a thinner thickness make it easier for the X-rays to penetrate. After the X-rays irradiate the sample, the transmission intensity of the X-rays is imaged by an image receiving and converting apparatus through brightness difference in grayscale contrast, thereby forming a scan image of the X-rays.

The applicant of this application has noticed that when the composite material strip is transported in the lamination machine, the separator may be damaged, for example, damaged or wrinkled, due to presence of foreign matter on a driving roller, rolling compaction, improper tension, or other mechanical reasons. In a laminated battery cell assembly, the separator is located between the anode electrode plate and the cathode electrode plate and has a relatively small material density, so it cannot be clearly highlighted on the scan image, which leads to the failure to detect the separator damage defect (mainly due to external factors, referred to as defect in this specification) in the preceding detection process in the related art, and in turn can easily lead to the outflow of defective battery cell assemblies, ultimately leading to battery failure and huge waste of production materials. How the production yield of laminated battery cell assemblies is improved is a technical issue that needs to be solved urgently by persons skilled in the art.

In view of the above technical issues found, the applicant has provided a method, and system for defect detection of a separator of a composite material strip, an electronic device, a lamination machine, a computer-readable storage medium, and a computer program product through in-depth research, which can quickly and accurately detect defects in the separator of the composite material strip (referred to as a separator visible on the appearance of the composite material strip in this specification), thereby improving the production yield of the laminated battery cell assembly.

The solution of the embodiments of this application utilizes computer vision technology. A continuous image of the composite material strip is obtained first; then at least one image segment is intercepted from the continuous image of the composite material strip; and then detection is performed on a separator region in the image segment. According to the solution of the embodiments of this application, detection can be performed for defects existing in a continuous separator of the composite material strip in the lamination process, which helps relevant personnel to adjust a relevant component in the lamination machine in a timely manner. Compared with the related art, this application can effectively control the outflow of battery cell assemblies with defects in the separator, thereby increasing the yield of production, and reducing the waste of production materials.

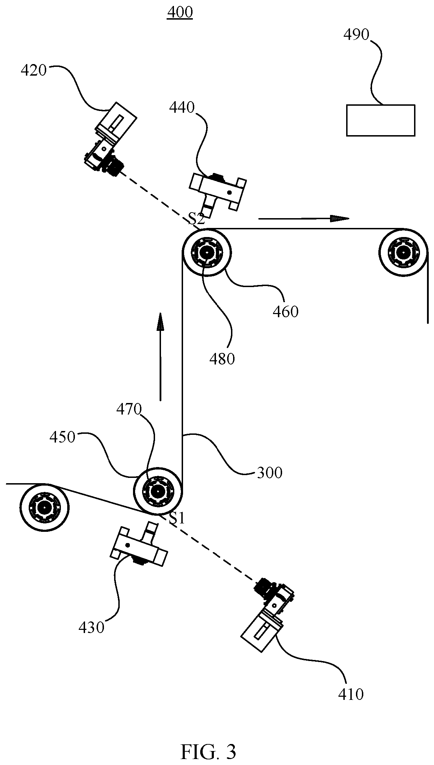

As shown in FIG. 3, a main hardware configuration of a system 400 for defect detection of a separator of a composite material strip according to some embodiments of this application includes a first image acquisition unit 410, a second image acquisition unit 420, and an electronic device 490. The first image acquisition unit 410 is configured to acquire a continuous image of one side surface of a composite material strip 300, and the second image acquisition unit 420 is configured to acquire a continuous image of another side surface of the composite material strip 300. The electronic device 490 is connected to the first image acquisition unit 410 and the second image acquisition unit 420 separately, and is configured to perform defect detection on separators on two side surfaces of the composite material strip 300 based on the continuous images acquired by the first image acquisition unit 410 and the second image acquisition unit 420, and output detection results.

The electronic device 490 may be connected to the first image acquisition unit 410 and the second image acquisition unit 420 in a wired or wireless manner. Main image acquisition targets of the first image acquisition unit 410 and the second image acquisition unit 420 are the composite material strip 300, and therefore the first image acquisition unit 410 and the second image acquisition unit 420 can be arranged at appropriate positions between the second compounding mechanism and lamination mechanism of the lamination machine.

The specific types of the first image acquisition unit 410 and the second image acquisition unit 420 are not limited, and a conventional area array industrial camera or a line scan camera may be used. In some embodiments of this application, the first image acquisition unit 410 is a first line scan camera and the second image acquisition unit 420 is a second line scan camera.

The line scan camera, also known as a single-scanline camera, is used in situations where there is relative motion between a measured object and the camera, and can obtain higher resolution and larger field of view. An infinitely extended continuous image can be obtained theoretically by acquiring image information of a measured object in motion line by line. Through the intelligent processing of software, an image segment can be intercepted from the continuous image, and the electronic device can perform processing on the image segment in a timely manner or cache it for later processing.

In some embodiments, the system 400 further includes a first line light source 430 for illuminating an acquisition region of the first line scan camera and a second line light source 440 for illuminating an acquisition region of the second line scan camera. A first line light source 430 and a second line light source 440 are configured to provide illumination for their corresponding line scan cameras. For example, relative installation positions of the first line light source 430 and the first line scan camera should satisfy that: A narrow bright strip formed by the first line light source 430 focusing on the composite material strip 300 is parallel to a sensor of the first line scan camera, such that the line scan camera can obtain better shooting quality. The specific types of the first line light source 430 and the second line light source 440 are not limited, and may be, for example, LED light sources, halogen lamps, high-frequency fluorescent lamps, or the like.

As shown in FIG. 3, in some embodiments, the system 400 for defect detection of a separator of a composite material strip further includes a first support roller 450, a first encoder 470 connected to the first support roller 450, a second support roller 460, and a second encoder 480 connected to the second support roller 460. The first support roller 450 abuts against one side surface of the composite material strip 300, and the first encoder 470 is configured to send a pulse signal to the first line scan camera to trigger the first line scan camera to acquire images line by line. The second support roller 460 abuts against another side surface of the composite material strip 300, and the second encoder 480 is configured to send a pulse signal to the second line scan camera to trigger the second line scan camera to acquire images line by line.

The encoder can convert angular displacement into pulse signal. The first support roller 450 is used as an example. When the first support roller 450 rotates continuously, the encoder sends one pulse signal per unit angle the first support roller 450 rotates, so as to trigger the first line scan camera to scan one side surface of the composite material strip 300.

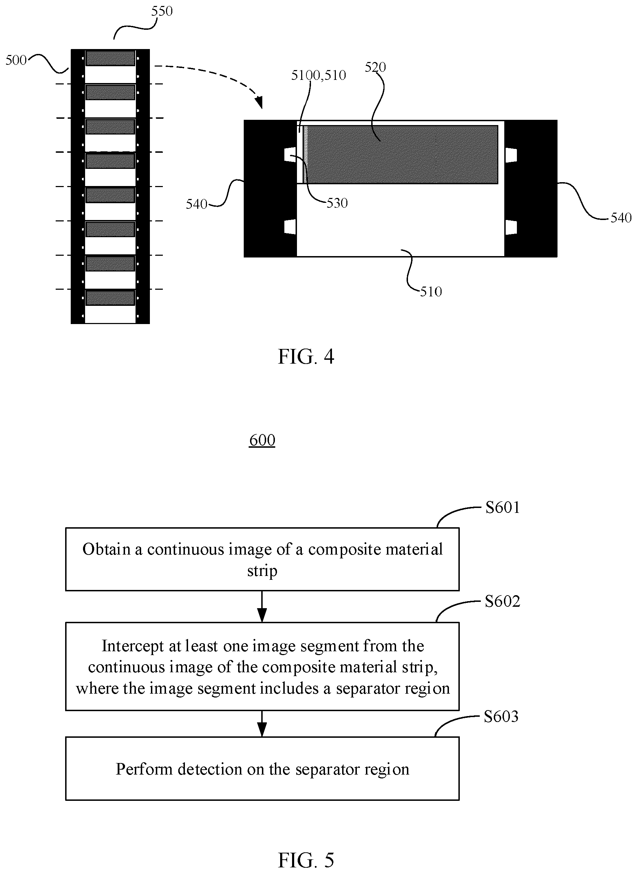

The first support roller 450 and the second support roller 460 can tighten the composite material strip 300, which is conducive to accurately acquiring images of the composite material strip 300, thereby improving the accuracy of defect detection. As shown in FIG. 4, the image segment 500 may further include a background region 540 corresponding to the first support roller 450 and the second support roller 460.

In some embodiments of this application, as shown in FIG. 3, an acquisition region of the first line scan camera is arranged at a tangent position S1 of the composite material strip 300 and the first support roller 450 (either of the two tangent positions is acceptable), and an acquisition region of the second line scan camera is arranged at a tangent position S2 of the composite material strip 300 and the second support roller 460 (either of the two tangent positions is acceptable). The first support roller 450 is used as an example. The acquisition region of the first line scan camera is arranged at the tangent position of the composite material strip 300 and the first support roller 450, which facilitates the installation and alignment of the first line scan camera (the first image acquisition unit 410) and the first line light source 430, thereby facilitating the accurate installation of the first line scan camera and the first line light source 430, and further improving the accuracy of defect detection.

As shown in FIG. 4, in the embodiments of this application, image segments 500 can be sequentially and continuously intercepted from the continuous images 550 for each side surface of the composite material strip 300, and then defect detection and analysis are performed on the separator of the composite material strip 300 based on the image segments 500. As an interception unit, each image segment 500 includes a separator region 510, an electrode plate body region 520 surrounded by the separator region 510, and a plurality of tab protruding regions 530 protruding from the separator region 510. In addition, the image segment 500 may further include images of objects other than the composite material strip 300, such as an image of a support roller, corresponding to the background region 540 in the image segment 500.

In some embodiments, the electrode plate body region 520 may be a cathode electrode plate body region exposed on a surface of the composite material strip 300. Because the anode electrode plate is sandwiched between two separators, the anode electrode plate body region is invisible in the image segment 500, but the tab protruding region 530 protruding from the separator region 510 is visible. In some other embodiments, the electrode plate body region 520 may be an anode electrode plate body region exposed on a surface of the composite material strip 300. Because the cathode electrode plate is sandwiched between two separators, the cathode electrode plate body region is invisible in the image segment 500, but the tab protruding region 530 protruding from the separator region 510 is visible. The polarity of the electrode plate body region 520 is not specifically limited in this application.

It should be noted that the image segment 500 may further include a tab-separator overlapping region 5100 connected between the electrode plate body region 520 and the tab protruding region 530. The entirety of the tab-separator overlapping region 5100 and tab protruding region 530 corresponds to the tab of one electrode plate on the composite material strip, to be specific, the entirety of the electrode plate body region 520, tab-separator overlapping region 5100, and tab protruding region 530 corresponds to one electrode plate on the composite material strip 300. Generally, a tab of an electrode plate is not provided with an active material layer, a metallic current collector is exposed at a portion of the electrode plate corresponding to the tab protruding region 530, and a metallic current collector may be exposed or a light-colored insulating layer (for example, a white insulating layer) may be provided at a portion of the electrode plate corresponding to the tab-separator overlapping region 5100. Generally, a grayscale of the metallic current collector or light-colored insulating layer in the image segment 500 is not lower than that of the separator region 510. Therefore, in some embodiments of this application, to simplify the computation, the tab-separator overlapping region 5100 can be included in the separator region 510, such that the separator region 510 includes the tab-separator overlapping region 5100.

As shown in FIG. 5, a method 600 for defect detection of a separator of a composite material strip according to some embodiments of this application includes the following steps S601 to S603.

Step S601: Obtain a continuous image of the composite material strip.

Step S602: Intercept at least one image segment from the continuous image of the composite material strip, where the image segment includes a separator region.

Step S603: Perform detection on the separator region.

According to the method 600 of these embodiments of this application, with computer vision technology, detection can be performed for defects existing in a continuous separator of the composite material strip in the lamination process, which helps relevant personnel to adjust a relevant component in the lamination machine in a timely manner, thereby effectively controlling the outflow of battery cell assemblies with defects in the separator, increasing the yield of production, and reducing the waste of production materials.

As shown in FIG. 4, the image segment 500, as an intercepting unit of the continuous image 550 of the composite material strip, at least includes a separator region 510 and an electrode plate body region 520. In addition, the image segment 500 can further include a background region 540, a tab-separator overlapping region 5100, and a plurality of tab protruding regions 530 protruding from the separator region 510. In some embodiments of this application, to simplify the computation, the tab-separator overlapping region 5100 can be included in the separator region 510, such that the separator region 510 includes the tab-separator overlapping region 5100.

In these embodiments of this application, the image segment 500 can be intercepted from the continuous image 550 shot by a line scan camera, or the image segment 500 can be obtained from an image shot by an area array camera, which is not specifically limited in this application.

In some embodiments, the foregoing step S601 includes: obtaining a continuous image shot by a line scan camera for each side surface of the composite material strip. In this way, the defect detection can be performed on the cathode electrode plates on two sides of the composite material strip.

In some embodiments of this application, the foregoing step S602 includes: intercepting an image segment from the continuous image according to an image segmentation algorithm. In these embodiments, based on an image segmentation algorithm, the image segment can be intercepted from the continuous image shot by the line scan camera, so that the image segment is obtained. The image segmentation algorithm is not limited to a specific type, for example, may be a threshold-based segmentation algorithm, a region-based segmentation algorithm, an edge-based segmentation algorithm, or a specific theory-based segmentation algorithm. Referring to FIG. 4, in some embodiments of this application, a threshold-based segmentation method is used to find an edge of the electrode plate body region 520 in a width direction of the composite material strip based on a grayscale difference between the electrode plate body region 520 and the separator region 510, and then segmentation is performed on the continuous image 550 in the width direction of the composite material strip based on edges of two adjacent electrode plate body regions 520 (a segmenting line can avoid the electrode plate body region 520 and be separated from the electrode plate body region 520 by several rows of pixels), to obtain the image segment 500.

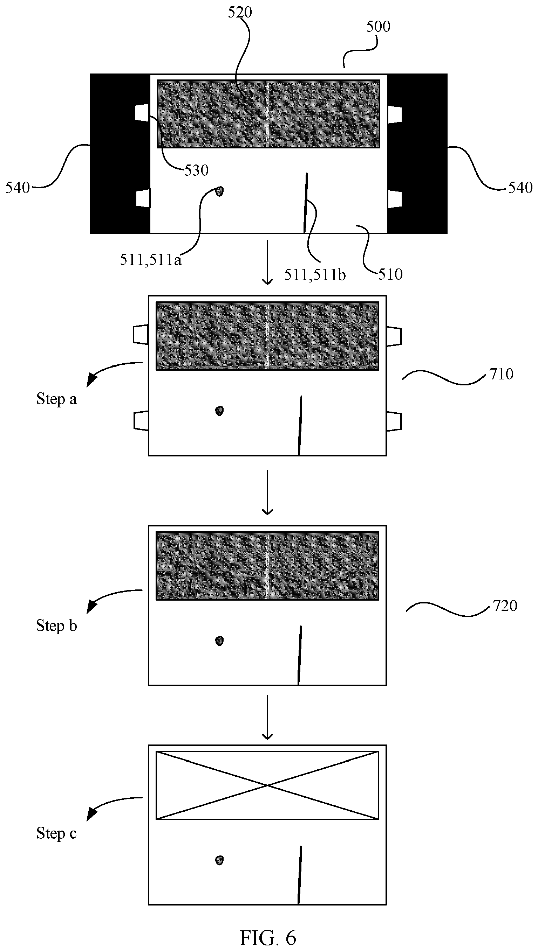

In some embodiments of this application, as shown in FIG. 6, the image segment 500 includes a separator region 510 (the tab-separator overlapping region 5100 is included in the separator region 510), an electrode plate body region 520 surrounded by the separator region 510, a background region 540 adjacent to the separator region 510, and a plurality of tab protruding regions 530, where the separator region 510 is located between the left and right parts of the background region 540. The method for defect detection of a separator of a composite material strip further includes: extracting the separator region 510 from the image segment 500. This extracting step includes:
step a: removing the background region 540 from the image segment 500 based on a maximum grayscale threshold of the background region 540 to obtain a first intermediate image 710;
step b: extracting, from the first intermediate image 710, an image of a maximum rectangular region inscribed with the edges of the first intermediate image as a second intermediate image 720; and
step c: removing the rectangular electrode plate body region 520 from the second intermediate image 720 based on a maximum grayscale threshold of the electrode plate body region 520 to obtain the separator region 510.

As shown in FIG. 6, in the image segment 500, a grayscale G1 of the tab protruding region 530, a grayscale G2 of the separator region 510, a grayscale G3 of the electrode plate body region 520, and a grayscale G4 of the background region 540 satisfy G4 < G3 < G2 ≤ G1. Therefore, in step a, the background region 540 can be removed from the image segment 500 based on the maximum grayscale threshold of the background region 540 (for example, set to 15).

In some embodiments, the background region 540 is removed from the image segment 500 using Blob algorithm in combination with a grayscale difference between the background region 540 and another region, to be specific, a characteristic region with a grayscale less than or equal to the maximum grayscale threshold of the background region 540 is removed. In computer vision, Blob refers to a connected component in an image, and Blob analysis is to extract and mark a connected component of a foreground/background separated binary image. The core concept of Blob algorithm is to find out a range of "grayscale mutation" in a region, so as to determine a size, shape, and area of the region. The maximum grayscale threshold of the background region 540 can be used as a grayscale threshold for binarizing the image segment 500.

In some embodiments of this application, in step a, the image segment 500 is first binarized based on the maximum grayscale threshold of the background region 540 (for example, set to 15), and a characteristic region with a grayscale less than or equal to the maximum grayscale threshold of the background region 540 is extracted; then segmentation is performed on the characteristic region based on a connection operator (connection operator) of machine vision software, so as to segment non-adjacent regions to form their own connected components; after that, the connected component (corresponding to the background region 540) with an area larger than a preset area threshold is selected based on a select _shape operator (selection operator) of the machine vision software; and finally, the background region 540 is subtracted from the image segment 500 based on a difference operator (subtraction operator) of the machine vision software to obtain the first intermediate image 710.

In some embodiments of this application, in step b, the maximum inner rectangle inscribed with the edges of the first intermediate image 710 can be computed based on an inner_rectangle1 operator (inner rectangle operator) of the machine vision software, and a region corresponding to the maximum inscribed rectangle (that is, the maximum rectangular region) can be intercepted as the second intermediate image 720.

In some embodiments of this application, in step c, binarization processing is performed on the second intermediate image 720 first, and a characteristic region with a grayscale less than or equal to the maximum grayscale threshold of the electrode plate body region 520 (for example, set to 25) is extracted; next, an opening operation is performed on the characteristic region based on an opening_rectangle1 operator (opening operation operator) of the machine vision software to remove noise; then, segmentation is performed on the characteristic region based on the connection operator (connection operator) of the machine vision software, so as to segment non-adjacent regions to form their own connected components; and after that, a connected component with a largest area and a rectangularity greater than a rectangularity threshold (for example, the rectangularity ranges from 0 to 1, and the rectangularity threshold is set to 0.8), that is, the electrode plate body region 520, is selected based on a select _shape operator (selection operator) of the machine vision software; and finally, the electrode plate body region 520 is subtracted from the second intermediate image 720 based on a difference operator (subtraction operator) of the machine vision software to obtain the separator region 510.

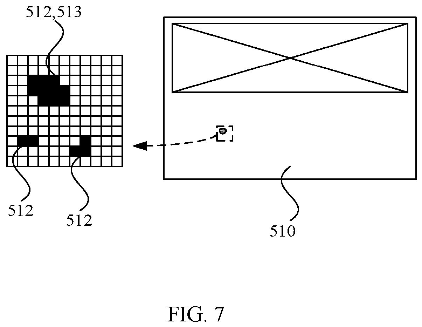

As shown in FIG. 5 and FIG. 7, in some embodiments of this application, the performing detection on the separator region includes: determining whether the separator region 510 includes a suspected defect region 513. This step may, for example, include:
in response to determining that the separator region 510 includes an abnormal pixel set, obtaining at least one independently connected abnormal pixel subset 512 based on the abnormal pixel set, where a grayscale of each pixel in the abnormal pixel set is less than a minimum grayscale threshold of the separator region 510; and
for each such abnormal pixel subset 512, in response to determining that an area of the abnormal pixel subset 512 is greater than an area threshold, determining that the separator region 510 includes the suspected defect region 513. The area threshold can be determined according to the requirements of battery production process specifications.

As shown in FIG. 6, after the separator of the composite material strip is damaged, the electrode plate below is exposed, which causes the grayscale of the image in the damaged region 511a to decrease, and after the separator of the composite material strip is wrinkled, the grayscale of the image in the wrinkled region 511b is also decreased. Therefore, the suspected defect region 513 can be determined using a grayscale difference between the defect region 511 and a normal region (for example, the grayscale of the electrode plate is generally less than 30, while the grayscale of the separator is generally not less than 110) and the area threshold specified according to the requirements of production process specifications.

In some embodiments, binarization processing is performed on the separator region 510, and a characteristic region with a grayscale smaller than a minimum grayscale threshold of the separator region 510 (for example, set to 110) is extracted; after that, as shown in FIG. 7, segmentation is performed on the characteristic region based on a connection operator (connection operator) of the machine vision software, so as to segment the non-adjacent regions to form their own connected components; and finally, based on an area_center operator (region center operator) of the machine vision software, the connected component with an area larger than the area threshold (for example, set to 1 square millimeters), that is, the suspected defect region 513, is selected.

In some embodiments, the performing detection on the separator region includes: determining, based on geometrical characteristic information of the suspected defect region 513, a suspected defect type corresponding to the suspected defect region 513, where the suspected defect type includes suspected damage or suspected wrinkle.

The geometrical characteristic information of the suspected defect region 513 includes, but is not limited to, shape, size, and area. As shown in FIG. 6, the wrinkled region 511b typically has a linear image and has an area greater than the area threshold (which can be determined by experience, for example, set to 2 square millimeters). Therefore, suspected wrinkle and suspected damage defects can be preliminarily distinguished based on this geometrical characteristic.

In some embodiments of this application, the performing detection on the separator region includes:
determining a confidence coefficient of the suspected defect region based on image information of the suspected defect region and image information of at least one separator defect sample in a separator defect sample library; and
in response to determining that the confidence coefficient is greater than a confidence threshold, determining that the suspected defect region is a defect region.

For example, in some embodiments, first, a plurality of separator defect samples in the separator defect sample library are traversed, and similarity comparison is performed between image information of the suspected defect region and each separator defect sample to obtain a similarity list; and then, screening is performed on the similarity list to retain a suspected defect region with a confidence coefficient greater than the confidence threshold as the determined defect region. With this step, a suspected defect region that does not meet the damage characteristics of the separator can be filtered out, thereby improving the accuracy of detection.

The separator defect sample library can be divided into several sample sub-libraries based on types of defects, for example, a damaged sample sub-library and a wrinkled sample sub-library. In some embodiments, the image information of the suspected defect region 513 is put into each of the sample sub-libraries in turn for similarity comparison with image information of samples therein. In some other embodiments, to increase the speed of software processing, after the suspected defect type corresponding to the suspected defect region 513 is preliminarily determined, image information of the suspected defect region 513 can be put into the corresponding sample sub-library for similarity comparison. For example, the image information of the suspected damaged region can be put into the damaged sample sub-library for similarity comparison with the image information of each damaged sample, so as to determine whether the suspected damaged region is a damaged region.

In some embodiments of this application, the method for defect detection of a separator of a composite material strip further includes: outputting a detection result, where the detection result may include at least one of the following: positioning information of the defect region in the image segment, geometrical characteristic information of the defect region, positioning information of the image segment corresponding to the composite material strip, alarm information indicating that the separator is defective, and a defect type.

The positioning information of the defect region in the image segment may be, for example, a frame line or an arrow indicating a position of the defect region. The geometrical characteristic information of the defect region includes, but is not limited to, length, width, and area of the defect region. The positioning information of the image segment corresponding to the composite material strip may be, for example, a shooting code corresponding to the image segment. The alarm information may be sound, light, or an alarm signal combining sound and light. The defect type is, for example, broken separator or wrinkled separator. This application does not specifically limit the content of the detection result.

It should be noted that in some embodiments of this application, to increase the speed of software processing, the defect type may not be analyzed, determined, or output.

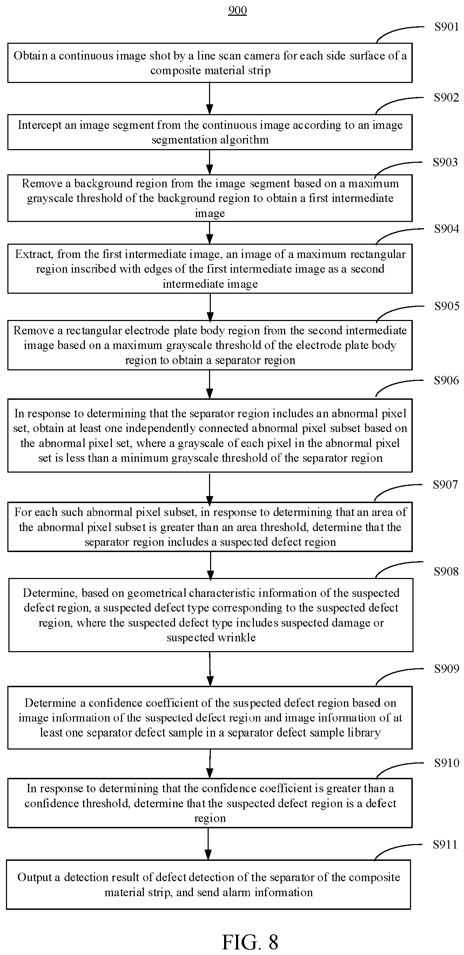

As shown in FIG. 8, a method 900 for defect detection of a separator of a composite material strip according to some embodiments of this application includes the following steps S901 to S911.

Step S901: Obtain a continuous image shot by a line scan camera for each side surface of the composite material strip.

Step S902: Intercept an image segment from the continuous image according to an image segmentation algorithm.

Step S903: Remove a background region from the image segment based on a maximum grayscale threshold of the background region to obtain a first intermediate image.

Step S904: Extract, from the first intermediate image, an image of a maximum rectangular region inscribed with edges of the first intermediate image as a second intermediate image.

Step S905: Remove a rectangular electrode plate body region from the second intermediate image based on a maximum grayscale threshold of the electrode plate body region to obtain a separator region.

Step S906: In response to determining that the separator region includes an abnormal pixel set, obtain at least one independently connected abnormal pixel subset based on the abnormal pixel set, where a grayscale of each pixel in the abnormal pixel set is less than a minimum grayscale threshold of the separator region.

Step S907: For each such abnormal pixel subset, in response to determining that an area of the abnormal pixel subset is greater than an area threshold, determine that the separator region includes a suspected defect region.

Step S908: Determine, based on geometrical characteristic information of the suspected defect region, a suspected defect type corresponding to the suspected defect region, where the suspected defect type includes suspected damage or suspected wrinkle.

Step S909: Determine a confidence coefficient of the suspected defect region based on image information of the suspected defect region and image information of at least one separator defect sample in a separator defect sample library.

Step S910: In response to determining that the confidence coefficient is greater than a confidence threshold, determine that the suspected defect region is a defect region.

Step S911: Output a detection result of defect detection of the separator of the composite material strip, and send alarm information.

According to the method of these embodiments of this application, detection can be performed for defects existing in a continuous separator of the composite material strip in the lamination process, which helps relevant personnel to adjust a relevant component in the lamination machine in a timely manner, thereby effectively controlling the outflow of battery cell assemblies with defects in the separator, increasing the yield of production, and reducing the waste of production materials.

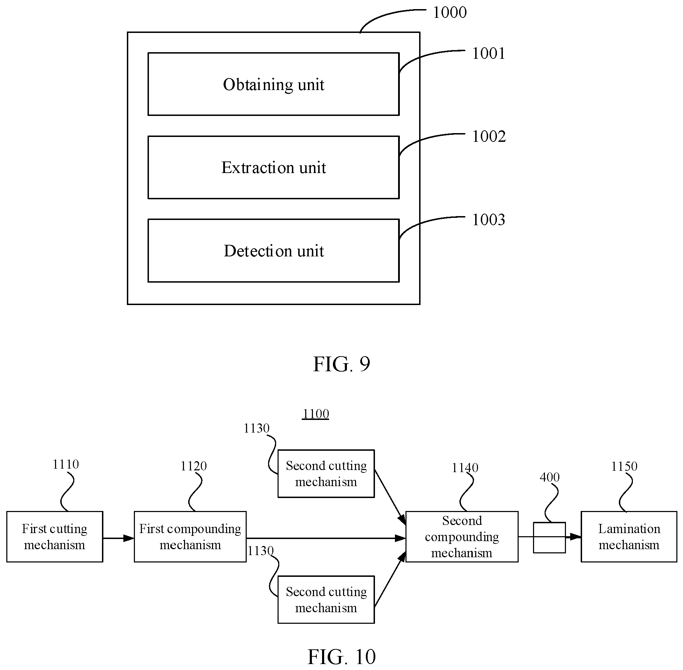

As shown in FIG. 9, an example of this application further provides an apparatus 1000 for defect detection of a separator of a composite material strip, including:
an obtaining unit 1001, configured to obtain a continuous image of the composite material strip;
an extraction unit 1002, configured to intercept at least one image segment from the continuous image of the composite material strip, where the image segment includes a separator region; and
a detection unit 1003, configured to perform detection on the separator region.

An embodiment of this application further provides an electronic device including at least one processor and a memory communicatively connected to the at least one processor, where the memory stores instructions executable by the at least one processor, and when the instructions are executed by the at least one processor, the at least one processor is caused to execute the foregoing method for defect detection of a separator of a composite material strip. The electronic device can be applied to the foregoing system 400 for defect detection of a separator of a composite material strip.

According to the foregoing apparatus 1000 for defect detection of a separator of a composite material strip and electronic device of this embodiment of this application, detection can be performed for defects existing in a continuous separator of the composite material strip in the lamination process, which helps relevant personnel to adjust a relevant component in the lamination machine in a timely manner, thereby effectively controlling the outflow of battery cell assemblies with defects in the separator, increasing the yield of production, and reducing the waste of production materials.

As shown in FIG. 10, an embodiment of this application further provides a lamination machine 1100 including the foregoing system 400 for defect detection of a separator of a composite material strip. In some embodiments, the lamination machine 1100 includes a first cutting mechanism 1110, a first compounding mechanism 1120, two second cutting mechanisms 1130, a second compounding mechanism 1140, and a lamination mechanism 1150 arranged in sequence, where the system 400 for defect detection of a separator of a composite material strip is arranged between the second compounding mechanism 1140 and the lamination mechanism 1150.

The first cutting mechanism 1110 is configured to cut a first electrode plate material segment from a first electrode plate material strip. The first compounding mechanism 1120 is configured to compound a first separator material strip and a second separator material strip with two side surfaces of the first electrode plate material segment to form a primary composite material strip. The two second cutting mechanisms 1130 are configured to cut a second electrode plate and a third electrode plate respectively from a second electrode plate material strip and a third electrode plate material strip in a one-to-one correspondence, where the second electrode plate material strip has the same polarity as the third electrode plate material strip and opposite polarity as the first electrode plate material strip. The second compounding mechanism 1140 is configured to alternately compound the second electrode plate and the third electrode plate with two side surfaces of the primary composite material strip to form a secondary composite material strip (for example, the foregoing composite material strip 300). The lamination mechanism 1150 is configured to laminate and cut the composite material strip to form a laminated assembly.

In the lamination process of the lamination machine, detection can be performed for defects existing in a continuous separator of the composite material strip, which helps relevant personnel to adjust a relevant component in the lamination machine in a timely manner, thereby effectively controlling the outflow of battery cell assemblies with defects in the separator, increasing the yield of production, and reducing the waste of production materials.

An embodiment of this application further provides a computer-readable storage medium storing computer instructions, where the computer instructions are configured to cause a computer to execute the method for defect detection of a separator of a composite material strip according to any one of the foregoing embodiments.

An embodiment of this application further provides a computer program product including a computer program, where when the computer program is executed by a processor, the method for defect detection of a separator of a composite material strip according to any one of the foregoing embodiments is implemented.

The invention is defined by the appended claims.

## Claims

1. A computer-implemented method (600) for defect detection of a separator (130) of a composite material strip (300), comprising:
obtaining (S601) a continuous image (550) of the composite material strip (300), comprising obtaining a continuous image shot by a line scan camera for each side surface of the composite material strip (300);
extracting (S602) at least one image segment (500) from the continuous image (550) of the composite material strip (300), wherein the image segment (500) comprises a separator region (510), an electrode plate body region (520) surrounded by the separator region (510), a plurality of tab protruding regions (530), and a background region (540) adjacent to the separator region (510);
extracting the separator region (510) from the image segment (500); and
performing (S603) detection on the separator region (510),
the extracting the separator region (510) from the image segment (500) comprises:
removing the background region (540) from the image segment (500) based on a maximum grayscale threshold of the background region (540) to obtain a first intermediate image (710);
extracting, from the first intermediate image (710), an image of a maximum rectangular region inscribed with edges of the first intermediate image (710) as a second intermediate image (720); and
removing the rectangular electrode plate body region (520) from the second intermediate image (720) based on a maximum grayscale threshold of the electrode plate body region (520) to obtain the separator region (510), and
said performing (S603) detection on the separator region (510) comprises:
determining whether the separator region (510) comprises a suspected defect region (513),
determining a confidence coefficient of the suspected defect region (513) based on image information of the suspected defect region (513) and image information of at least one separator defect sample in a separator defect sample library; and
in response to determining that the confidence coefficient is greater than a confidence threshold, determining that the suspected defect region (513) is a defect region.

2. The method (600) according to claim 1, wherein the determining whether the separator region (510) comprises a suspected defect region (513) comprises:
in response to determining that the separator region (510) comprises an abnormal pixel set, obtaining at least one independently connected abnormal pixel subset based on the abnormal pixel set, wherein a grayscale of each pixel in the abnormal pixel set is less than a minimum grayscale threshold of the separator region (510); and
for each abnormal pixel subset, in response to determining that an area of the abnormal pixel subset is greater than an area threshold, determining that the separator region (510) comprises the suspected defect region (513).

3. The method (600) according to claim 1 or 2, wherein the performing (S603) detection on the separator region (510) comprises:
determining a suspected defect type corresponding to the suspected defect region (513) based on geometrical characteristic information of the suspected defect region (513), wherein the suspected defect type comprises suspected damage or suspected wrinkle.

4. The method (600) according to any one of claims 1 to 3, wherein the method (600) further comprises outputting a detection result, wherein
the detection result comprises at least one of the following: positioning information of the defect region in the image segment (500), geometrical characteristic information of the defect region, positioning information of the image segment (500) in the composite material strip (300), alarm information indicating that the separator (130) is defective, and a defect type, wherein the defect type comprises damage or wrinkle.

5. An electronic device (490), comprising at least one processor and a memory communicatively connected to the at least one processor, wherein
the memory having stored thereon instructions executable by the at least one processor, and when the instructions are executed by the at least one processor, the at least one processor is caused to execute the method (600) according to any one of claims 1 to 4.

6. A system (400) for defect detection of a separator (130) of a composite material strip (300), comprising:
a first image acquisition unit (410), configured to acquire a continuous image (550) of a side surface of the composite material strip (300);
a second image acquisition unit (420), configured to acquire a continuous image (550) of another side surface of the composite material strip (300); and
the electronic device (490) according to claim 5, connected to the first image acquisition unit (410) and the second image acquisition unit (420) separately.

7. The system (400) according to claim 6, wherein
the first image acquisition unit (410) is a first line scan camera, and the second image acquisition unit (420) is a second line scan camera; and
the system (400) further comprises a first line light source (430) for illuminating an acquisition region of the first line scan camera and a second line light source (440) for illuminating an acquisition region of the second line scan camera.

8. The system (400) according to claim 7, further comprising:
a first support roller (450) and a first encoder (470) connected to the first support roller (450), wherein the first support roller (450) abuts against a side surface of the composite material strip (300), and the first encoder (470) is configured to send a pulse signal to the first line scan camera to trigger the first line scan camera to acquire images line by line; and
a second support roller (460) and a second encoder (480) connected to the second support roller (460), wherein the second support roller (460) abuts against another side surface of the composite material strip (300), and the second encoder (480) is configured to send a pulse signal to the second line scan camera to trigger the second line scan camera to acquire images line by line; and
preferably,
the acquisition region of the first line scan camera is arranged at a tangent position of the composite material strip (300) and the first support roller (450); and
the acquisition region of the second line scan camera is arranged at a tangent position of the composite material strip (300) and the second support roller (460).

9. A lamination machine (1100), comprising the system (400) according to any one of claims 6 to 8.

10. A computer-readable storage medium having stored thereon computer instructions which, when executed by a computer, cause the computer to execute the method (600) according to any one of claims 1 to 4.

11. A computer program product, comprising a computer program which, when executed by a processor, causes the computer to carry out the method (600) according to any one of claims 1 to 4.

## Patentansprüche

1. Computerimplementiertes Verfahren (600) zur Defekterkennung eines Trennelements (130) eines Verbundwerkstoffstreifens (300), umfassend:
Beschaffen (S601) eines kontinuierlichen Bildes (550) des Verbundwerkstoffstreifens (300), umfassend Beschaffen eines durch eine Zeilenkamera für jede Seitenoberfläche des Verbundwerkstoffstreifens (300) aufgenommenen kontinuierlichen Bildes;
Extrahieren (S602) mindestens eines Bildsegments (500) aus dem kontinuierlichen Bild (550) des Verbundwerkstoffstreifens (300), wobei das Bildsegment (500) einen Trennelementbereich (510), einen Elektrodenplattenkörperbereich (520) umgeben von dem Trennelementbereich (510), eine Mehrzahl von Bereichen von hervorstehenden Tabs (530) und einen Hintergrundbereich (540) direkt neben dem Trennelementbereich (510) umfasst;
Extrahieren des Trennelementbereichs (510) aus dem Bildsegment (500); und
Durchführen (S603) der Erkennung auf dem Trennelementbereich (510),
wobei das Extrahieren des Trennelementbereichs (510) aus dem Bildsegment (500) Folgendes umfasst:
Entfernen des Hintergrundbereichs (540) aus dem Bildsegment (500) auf der Basis einer maximalen Grautonschwelle des Hintergrundbereichs (540), um ein erstes intermediäres Bild (710) zu beschaffen;
Extrahieren, aus dem ersten intermediären Bild (710), eines Bildes eines maximalen rechteckigen Bereichs einbeschrieben mit Kanten des ersten intermediären Bildes (710) als ein zweites intermediäres Bild (720); und
Entfernen des rechteckigen Elektrodenplattenkörperbereichs (520) aus dem zweiten intermediären Bild (720) auf der Basis einer maximalen Grautonschwelle des Elektrodenplattenkörperbereichs (520), um den Trennelementbereich (510) zu beschaffen, und
das Durchführen (S603) der Erkennung auf dem Trennelementbereich (510) Folgendes umfasst:
Bestimmen, ob der Trennelementbereich (510) einen vermutlichen Defektbereich (513) umfasst,
Bestimmen eines Konfidenzkoeffizienten des vermutlichen Defektbereichs (513) auf der Basis von Bildinformation des vermutlichen Defektbereichs (513) und von Bildinformation eines Trennelementdefektsamples in einer Bibliothek von Trennelementdefektsamples; und
in Antwort auf das Bestimmen, dass der Konfidenzkoeffizient größer als eine Konfidenzschwelle ist, Bestimmen, dass der vermutliche Defektbereich (513) ein Defektbereich ist.

2. Verfahren (600) nach Anspruch 1, wobei das Bestimmen, ob der Trennelementbereich (510) einen vermutlichen Defektbereich (513) umfasst, Folgendes umfasst:
in Antwort auf ein Bestimmen, dass der Trennelementbereich (510) einen unnormalen Pixelsatz umfasst, Beschaffen mindestens eines unabhängig zusammenhängenden unnormalen Pixelteilsatzes auf der Basis des unnormalen Pixelsatzes, wobei ein Grautonwert jedes Pixels im unnormalen Pixelsatz kleiner als eine minimale Grautonschwelle des Trennelementbereichs (510) ist; und
für jeden unnormalen Pixelsatz in Antwort auf ein Bestimmen, dass eine Fläche des unnormalen Pixelsatzes größer als eine Flächenschwelle ist, Bestimmen, dass der Trennelementbereich (510) den vermutlichen Defektbereich (513) umfasst.

3. Verfahren (600) nach Anspruch 1 oder 2, wobei das Durchführen (S603) der Erkennung auf dem Trennelementbereich (510) Folgendes umfasst:
Bestimmen eines vermutlichen Defekttyps entsprechend dem vermutlichen Defektbereich (513) auf der Basis von geometrischer Charakteristik-Information des vermutlichen Defektbereichs (513), wobei der vermutliche Defekttyp vermutlichen Schaden oder vermutliche Verzerrung umfasst.

4. Verfahren (600) nach einem der Ansprüche 1 bis 3, wobei das Verfahren (600) ferner Ausgeben eines Erkennungsergebnisses umfasst, wobei
das Erkennungsergebnis mindestens eines der Folgenden umfasst: Positionierinformation des Defektbereichs im Bildsegment (500), geometrische Charakteristik-Information des Defektbereichs, Positionierinformation des Bildsegments (500) im Verbundwerkstoffstreifen (300), Alarminformation, die angibt, dass das Trennelement (130) defekt ist, und ein Defekttyp, wobei der Defekttyp Schaden oder Verzerrung umfasst.

5. Elektronische Vorrichtung (490), umfassend mindestens einen Prozessor und einen kommunikativ mit dem mindestens einen Prozessor verbundenen Arbeitsspeicher, wobei
auf dem Arbeitsspeicher Instruktionen gespeichert sind, die durch den mindestens einen Prozessor ausführbar sind, und wobei die Instruktionen bei Ausführung durch den mindestens einen Prozessor den mindestens einen Prozessor veranlassen, das Verfahren (600) nach einem der Ansprüche 1 bis 4 auszuführen.

6. System (400) zur Defekterkennung eines Trennelements (130) eines Verbundwerkstoffstreifens (300), umfassend:
eine erste Bilderfassungseinheit (410) konfiguriert zum Erfassen eines kontinuierlichen Bildes (550) einer Seitenoberfläche des Verbundwerkstoffstreifens (300);
eine zweite Bilderfassungseinheit (420) konfiguriert zum Erfassen eines kontinuierlichen Bildes (550) einer anderen Seitenoberfläche des Verbundwerkstoffstreifens (300); und
die elektronische Vorrichtung (490) nach Anspruch 5, separat verbunden mit der ersten Bilderfassungseinheit (410) und der zweiten Bilderfassungseinheit (420).

7. System (400) nach Anspruch 6, wobei
die erste Bilderfassungseinheit (410) eine erste Zeilenkamera ist und die zweite Bilderfassungseinheit (420) eine zweite Zeilenkamera ist; und
das System (400) ferner eine erste Zeilenlichtquelle (430) zum Beleuchten eines Erfassungsbereichs der ersten Zeilenkamera und eine zweite Zeilenlichtquelle (440) zum Beleuchten eines Erfassungsbereichs der zweiten Zeilenkamera umfasst.

8. System (400) nach Anspruch 7, ferner umfassend:
einen ersten Stützroller (450) und einen ersten Encoder (470) verbunden mit dem ersten Stützroller (450), wobei der erste Stützroller (450) gegen eine Seitenoberfläche des Verbundwerkstoffstreifens (300) anliegt, und wobei der erste Encoder (470) konfiguriert ist, ein Pulssignal an die erste Zeilenkamera zu senden, um die erste Zeilenkamera zum Erfassen von Bildern Zeile für Zeile zu triggern; und
einen zweiten Stützroller (460) und einen zweiten Encoder (480) verbunden mit dem zweiten Stützroller (460), wobei der zweite Stützroller (460) gegen eine andere Seitenoberfläche des Verbundwerkstoffstreifens (300) anliegt, und wobei der zweite Encoder (480) konfiguriert ist, ein Pulssignal an die zweite Zeilenkamera zu senden, um die zweite Zeilenkamera zum Erfassen von Bildern Zeile für Zeile zu triggern; und
vorzugsweise,
wobei der Erfassungsbereich der ersten Zeilenkamera in einer tangentialen Position zum Verbundwerkstoffstreifen (300) und zum ersten Stützroller (450) angeordnet ist; und
wobei der Erfassungsbereich der zweiten Zeilenkamera in einer tangentialen Position zum Verbundwerkstoffstreifen (300) und zum zweiten Stützroller (460) angeordnet ist.

9. Laminationsmaschine (1100), umfassend das System (400) nach einem der Ansprüche 6 bis 8.

10. Computerlesbares Speichermedium mit darauf gespeicherten Computerinstruktionen, welche bei Ausführung durch einen Computer den Computer veranlassen, das Verfahren (600) nach einem der Ansprüche 1 bis 4 auszuführen.

11. Computerprogrammprodukt umfassend ein Computerprogramm, das bei Ausführung durch einen Prozessor den Computer veranlasst, das Verfahren (600) nach einem der Ansprüche 1 bis 4 auszuführen.

## Revendications

1. Procédé mis en œuvre par ordinateur (600) pour la détection de défauts d'un séparateur (130) d'une bande de matériau composite (300), comprenant les étapes consistant à :
obtenir (S601) une image continue (550) de la bande de matériau composite (300), comprenant l'obtention d'une image continue prise par une caméra à balayage linéaire pour chaque surface latérale de la bande de matériau composite (300) ;
extraire (S602), de l'image continue (550) de la bande de matériau composite (300), au moins un segment d'image (500), le segment d'image (500) comprenant une région de séparateur (510), une région de corps d'électrode plane (520) entourée par la région de séparateur (510), une pluralité de régions saillantes de pattes (530) et une région d'arrière-plan (540) adjacente à la région de séparateur (510) ;
extraire, du segment d'image (500), la région de séparateur (510) ; et
réaliser (S603) une détection sur la région de séparateur (510),
l'extraction, du segment d'image (500), de la région de séparateur (510) comprenant les étapes consistant à :
supprimer, du segment d'image (500), la région d'arrière-plan (540), sur la base d'un seuil d'échelle de gris maximum de la région d'arrière-plan (540) pour obtenir une première image intermédiaire (710) ;
extraire, de la première image intermédiaire (710), une image d'une région rectangulaire maximale inscrite avec des bords de la première image intermédiaire (710) en tant que seconde image intermédiaire (720) ; et
supprimer, de la seconde image intermédiaire (720), la région de corps d'électrode plane rectangulaire (520), sur la base d'un seuil d'échelle de gris maximum de la région de corps d'électrode plane (520) pour obtenir la région de séparateur (510) ; et
ladite réalisation (S603) d'une détection sur la région de séparateur (510) comprenant les étapes consistant à :
déterminer si la région de séparateur (510) comprend une région de défaut suspect (513) ;
déterminer un coefficient de confiance de la région de défaut suspect (513), sur la base d'informations d'image de la région de défaut suspect (513) et d'informations d'image d'au moins un échantillon de défaut de séparateur dans une bibliothèque d'échantillons de défaut de séparateur ; et
en réponse à la détermination du fait que le coefficient de confiance est supérieur à un seuil de confiance, déterminer que la région de défaut suspect (513) est une région de défaut.

2. Procédé (600) selon la revendication 1, le fait de déterminer si la région de séparateur (510) comprend une région de défaut suspect (513) comprenant les étapes consistant à :
en réponse à la détermination du fait que la région de séparateur (510) comprend un ensemble de pixels anormaux, obtenir au moins un sous-ensemble de pixels anormaux connectés indépendamment sur la base de l'ensemble de pixels anormaux, une échelle de gris de chaque pixel dans l'ensemble de pixels anormaux étant inférieure à un seuil d'échelle de gris minimum de la région de séparateur (510) ; et
pour chaque sous-ensemble de pixels anormaux, en réponse à la détermination du fait qu'une surface du sous-ensemble de pixels anormaux est supérieure à un seuil de surface, déterminer que la région de séparateur (510) comprend la région de défaut suspect (513).

3. Procédé (600) selon la revendication 1 ou 2, la réalisation (S603) d'une détection sur la région de séparateur (510) comprenant l'étape consistant à :
déterminer un type de défaut suspect correspondant à la région de défaut suspect (513) sur la base d'informations de caractéristiques géométriques de la région de défaut suspect (513), le type de défaut suspect comprenant un dommage suspect ou un pli suspect.

4. Procédé (600) selon l'une quelconque des revendications 1 à 3, le procédé (600) comprenant en outre l'étape consistant à délivrer en sortie un résultat de détection,
le résultat de détection comprenant au moins un des éléments suivants : des informations de positionnement de la région de défaut dans le segment d'image (500), des informations de caractéristiques géométriques de la région de défaut, des informations de positionnement du segment d'image (500) dans la bande de matériau composite (300), des informations d'alarme indiquant que le séparateur (130) est défectueux, et un type de défaut, le type de défaut comprenant un dommage ou un pli.

5. Dispositif électronique (490), comprenant au moins un processeur et une mémoire connectée en communication à l'au moins un processeur,
des instructions exécutables par l'au moins un processeur étant stockées sur la mémoire, et lorsque les instructions sont exécutées par l'au moins un processeur, l'au moins un processeur étant amené à exécuter le procédé (600) selon l'une quelconque des revendications 1 à 4.

6. Système (400) pour la détection de défauts d'un séparateur (130) d'une bande de matériau composite (300), comprenant :
une première unité d'acquisition d'image (410), configurée pour acquérir une image continue (550) d'une surface latérale de la bande de matériau composite (300) ;
une seconde unité d'acquisition d'image (420), configurée pour acquérir une image continue (550) d'une autre surface latérale de la bande de matériau composite (300) ; et
le dispositif électronique (490) selon la revendication 5, connecté séparément à la première unité d'acquisition d'image (410) et à la seconde unité d'acquisition d'image (420).

7. Système (400) selon la revendication 6,
la première unité d'acquisition d'image (410) étant une première caméra à balayage linéaire, et la seconde unité d'acquisition d'image (420) étant une seconde caméra à balayage linéaire ; et
le système (400) comprenant en outre une première source de lumière linéaire (430) pour éclairer une région d'acquisition de la première caméra à balayage linéaire et une seconde source de lumière linéaire (440) pour éclairer une région d'acquisition de la seconde caméra à balayage linéaire.

8. Système (400) selon la revendication 7, comprenant en outre :
un premier rouleau de support (450) et un premier codeur (470) relié au premier rouleau de support (450), le premier rouleau de support (450) venant en butée contre une surface latérale de la bande de matériau composite (300), et le premier codeur (470) étant configuré pour envoyer un signal d'impulsion à la première caméra à balayage linéaire pour déclencher l'acquisition d'images ligne par ligne par la première caméra à balayage linéaire ; et
un second rouleau de support (460) et un second codeur (480) relié au second rouleau de support (460), le second rouleau de support (460) venant en butée contre une autre surface latérale de la bande de matériau composite (300), et le second codeur (480) étant configuré pour envoyer un signal d'impulsion à la seconde caméra à balayage linéaire pour déclencher l'acquisition d'images ligne par ligne par la seconde caméra à balayage linéaire ; et
de préférence,
la région d'acquisition de la première caméra à balayage linéaire étant agencée au niveau d'une position tangente de la bande de matériau composite (300) et du premier rouleau de support (450) ; et
la région d'acquisition de la seconde caméra à balayage linéaire étant agencée au niveau d'une position tangente de la bande de matériau composite (300) et du second rouleau de support (460).

9. Machine de laminage (1100), comprenant le système (400) selon l'une quelconque des revendications 6 à 8.

10. Support de stockage lisible par ordinateur sur lequel sont stockées des instructions informatiques qui, lorsqu'elles sont exécutées par un ordinateur, amènent l'ordinateur à exécuter le procédé (600) selon l'une quelconque des revendications 1 à 4.

11. Produit-programme informatique, comprenant un programme informatique qui, lorsqu'il est exécuté par un processeur, amène l'ordinateur à réaliser le procédé (600) selon l'une quelconque des revendications 1 à 4.
